# EUROPÄISCHE PATENTSCHRIFT

(11) **EP 2 706 270 B1**
(45) Veröffentlichungstag und Bekanntmachung des Hinweises auf die Patenterteilung: **04.10.2017**
(21) Anmeldenummer: 13181214.1
(22) Anmeldetag: 21.08.2013
(51) Int. Cl.: F16H 63/34, F16H 63/18

(54) **Parksperrenanordnung**
Parking lock assembly
Ensemble de verrouillage de stationnement

(30) Priorität: 05.09.2012 DE 102012017817
(43) Veröffentlichungstag der Anmeldung: 12.03.2014
(73) Patentinhaber: GETRAG B.V. & Co. KG, 74199 Untergruppenbach (DE)
(72) Erfinder: Burgardt, Georg, 74626 Bretzfeld (DE)
(74) Vertreter: Witte, Weller & Partner Patentanwälte mbB

(56) Entgegenhaltungen:
- FR-A1- 2 810 422
- US-B1- 6 725 962

## Beschreibung

Die vorliegende Erfindung betrifft eine Parksperrenanordnung mit einem Parksperrenmechanismus, der zwischen einer Parksperrenposition und einer Freigabeposition bewegbar ist, mit einer um eine erste Achse verdrehbar gelagerten Betätigungseinrichtung, die dazu ausgebildet ist, durch eine Verdrehung den Parksperrenmechanismus zu betätigen, und mit einer Koppeleinrichtung, die die Betätigungseinrichtung mit einem Aktuierungsmechanismus koppelt, wobei der Aktuierungsmechanismus um eine zweite Achse relativ zu einer Walze verdrehbar gelagert ist, die mittels eines Antriebs um die zweite Achse verdrehbar ist.

Eine vergleichbare Parksperrenanordnung dieser Art ist aus dem Dokument DE 20 2008 001 760 U1 bekannt.

Parksperrenanordnungen dienen zum Verhindern der Beweglichkeit von Kraftfahrzeugen und werden insbesondere in Kraftfahrzeugen mit automatisierten Antriebssträngen verwendet, beispielsweise mit Wandlerautomatikgetrieben, mit Doppelkupplungsgetrieben etc.

Der Parksperrenmechanismus kann beispielsweise ein Parksperrenrad aufweisen, das starr mit einer Getriebeausgangswelle verbunden ist, sowie eine Parksperrenklinke, die in der Parksperrenposition in eine Verzahnung des Parksperrenrades greift, um auf diese Weise das Fahrzeug am Abtrieb zu immobilisieren.

Die Betätigungseinrichtung kann nach der Art eines Rades oder einer Welle ausgebildet sein, an der ein Nocken vorgesehen ist, mittels dessen der Parksperrenmechanismus von einer Freigabeposition in eine Parksperrenposition drückbar ist.

Wie es in dem Dokument DE 20 2008 001 760 U1 offenbart ist, kann der Nocken dabei begrenzt verdrehbar an der Betätigungswelle gelagert sein, wobei der Nocken über eine Feder mit der Betätigungswelle verbunden ist.

Hierdurch ist es möglich, den Parksperrenmechanismus auch ausgehend aus einer Relativposition zu betätigen, bei der beispielsweise eine Nase einer Parksperrenklinke mit einem Zahn eines Parksperrenrades ausgerichtet ist.

Zum Verdrehen der Betätigungswelle des Dokumentes DE 20 2008 001 760 kann ein Aktuator oder ein manueller Parksperrenschaltmechanismus vorgesehen sein.

Aus dem Dokument DE 10 2011 105 068 A1 ist eine Parksperrenanordnung bekannt, die mittels eines Hydraulikzylinders und eines zugeordneten Hydraulikkreises betätigbar ist. Ein Kolben des Hydraulikzylinders ist dabei mittels eines Verriegelungselementes in einer Freigabeposition verriegelbar. Zum Entriegeln des Verriegelungselementes ist ein elektromagnetischer Aktuator vorgesehen, und parallel hierzu ein hydraulischer und/oder pneumatischer Aktuator vorgesehen.

Ferner ist aus der vorveröffentlichten Anmeldung DE 10 2012 007 061 eine Parksperrenanordnung bekannt, bei der ein Betätigungsrad am Außenumfang mit einer Verzahnung versehen ist, die in Eingriff steht mit einer Außenverzahnung einer Schaltwalze, die ansonsten zum Betätigen wenigstens einer Schaltkupplungsanordnung eines Getriebes des Antriebsstranges verwendet wird. Dabei ist an dem Betätigungsrad eine umlaufende Nut vorgesehen, in die ein Stift greift, der mit einer Parksperrenklinke verbunden ist.

Aus dem Dokument US 6,725,962 B1 ist ein Geländefahrzeug mit einem schaltbaren Getriebe und einem Parksperrenmechanismus bekannt, wobei eine Parksperreneinrichtung mit der Verzahnung eines Parksperrenrads in Eingriff gebracht werden kann, wobei der Parksperrenmechanismus einen Nockenfolger aufweist, und wobei durch ein entsprechendes Verdrehen des Nockens der Parksperrenmechanismus aktiviert bzw. in Eingriff mit dem Parksperrenrad gebracht werden kann.

Aus dem Dokument FR 2 810 422, welches alle Merkmale des Oberbegriffs nach Anspruch 1 offenbart, ist ein Parksperrenmechanismus bekannt, bei dem eine Feder eine konstante Kraft auf einen Spannhebel gibt, um den Spannhebel in eine freigebende Position zu versetzen, wobei der Spannhebel über einen vorgespannten Hebelmechanismus in Eingriff mit einer Verzahnung eines Parksperrenrads gebracht werden kann, und wobei der Hebelmechanismus durch einen Aktuator entgegen der Vorspannrichtung aktuiert werden kann, sodass der Spannhebel nicht mehr in Eingriff mit der Verzahnung des Parksperrenrads ist.

Vor diesem Hintergrund ist es eine Aufgabe der Erfindung, eine verbesserte Parksperrenanordnung anzugeben, die kompakt baut und/oder eine redundante Betätigung auf einfache Art und Weise ermöglicht.

Diese Aufgabe wird gemäß der vorliegenden Erfindung durch eine Parksperrenanordnung gemäß Anspruch1 gelöst.

Erfindungsgemäß ist die Verriegelungseinrichtung in eine Verriegelungsposition mechanisch vorgespannt, in der die Verriegelungseinrichtung den Aktuierungsmechanismus in der Deaktivierungsposition verriegelt.

Hierbei ist ein aktiver Eingriff nur zum Versetzen der Verriegelungseinrichtung in eine Entriegelungsposition notwendig. Dadurch, dass der Aktuierungsmechanismus relativ zu der Walze verdrehbar ist, kann der Aktuierungsmechanismus kompakter bauen. Insbesondere kann hierbei eine Koppeleinrichtung so ausgelegt sein, dass beispielsweise lediglich ein kleiner Umfangsabschnitt des Aktuierungsmechanismus und/oder ein kleiner Umfangsabschnitt eines Betätigungsrades mit einer Verzahnung versehen ist. Mit anderen Worten kann die Koppeleinrichtung deutlich vereinfacht werden und kann insbesondere kompakter bauen.

Die erste Achse und die zweite Achse können insbesondere parallel ausgebildet sein, wobei die Koppeleinrichtung beispielsweise durch einen Riemenantrieb, durch einen Kettenantrieb oder durch einen Verzahnungseingriff realisiert sein kann.

Die Betätigungseinrichtung ist vorzugsweise ein Betätigungsrad, das ein- oder zweiteilig ausgebildet sein kann. Bei einer zweiteiligen Ausbildung eines Betätigungsrades kann beispielsweise ein Nocken relativ verdrehbar zu dem anderen Teil des Betätigungsrades ausgebildet sein, so dass, wie in dem Dokument DE 20 2008 001 760 U1 beschrieben, eine Verdrehung des Betätigungsrades auch dann möglich ist, wenn sich eine Parksperrenklinke oberhalb eines Zahnes eines Parksperrenrades befindet und/oder der Parksperrenmechanismus auf sonstige Art und Weise temporär blockiert ist.

Der Parksperrenmechanismus ist vorzugsweise durch eine Anordnung von Parksperrenrad und Parksperrenklinke gebildet, wobei der Eingriff der Parksperrenklinke vorzugsweise am Außenumfang des Parksperrenrades stattfindet.

Um den Aktuierungsmechanismus in einer Deaktivierungsposition zu halten, ist eine Verriegelungseinrichtung vorgesehen, mittels der der Aktuierungsmechanismus in der Deaktivierungsposition verriegelbar ist, wobei der Parksperrenmechanismus in der Deaktivierungsposition des Aktuierungsmechanismus in die Freigabeposition bewegbar ist.

Durch eine mechanische Vorspannung des Parksperrenmechanismus in die Freigabeposition kann dieser folglich in der Freigabeposition gehalten werden, wenn der Aktuierungsmechanismus mittels der Verriegelungseinrichtung in der Deaktivierungsposition verriegelt ist.

Bei dieser Ausführungsform kann der Aktuierungsmechanismus folglich mittels der Verriegelungseinrichtung generell in der Deaktivierungsposition verriegelt werden, um beispielsweise einen Fahrbetrieb eines Kraftfahrzeuges einzurichten. Zum Einlegen der Parksperrenanordnung (Bewegen in die Parksperrenposition) wird die Verriegelungseinrichtung dann in eine Entriegelungsposition versetzt, so dass der Aktuierungsmechanismus die Parksperrenanordnung in die Parksperrenposition bewegen kann. Wenn der Aktuierungsmechanismus mechanisch in eine Aktivierungsposition vorgespannt ist, kann das Versetzen der Parksperrenanordnung in die Parksperrenposition folglich durch die mechanische Vorspannung erfolgen, sobald die Verriegelungseinrichtung in der Entriegelungsposition ist.

Generell ist es dabei möglich, die Verriegelungseinrichtung aktiv in eine Verriegelungs- und aktiv in eine Entriegelungsposition zu versetzen, wozu ein geeigneter Aktuator vorgesehen sein kann.

Die Aufgabe wird somit vollkommen gelöst.

Gemäß einer besonders bevorzugten Ausführungsform ist der Aktuierungsmechanismus mechanisch in eine Aktivierungsposition vorgespannt, in der der Parksperrenmechanismus in die Parksperrenposition bewegbar ist.

Die Vorspannung erfolgt dabei vorzugsweise gegen ein Gehäuse der Parksperrenanordnung, bei dem es sich um ein Gehäuse eines Getriebes handeln kann.

Bei dieser Ausführungsform ist der Aktuierungsmechanismus folglich unabhängig von der relativen Drehstellung der Schaltwalze dazu bestrebt, die Parksperrenposition einzurichten.

Gemäß einer weiteren bevorzugten Ausführungsform ist der Parksperrenmechanismus mechanisch in die Freigabeposition vorgespannt. Auch diese Vorspannung kann durch eine Feder erfolgen, die sich beispielsweise an einem Gehäuse der Parksperrenanordnung abstützt.

Hierdurch befindet sich der Parksperrenmechanismus dann, wenn er nicht durch die Betätigungseinrichtung beaufschlagt wird, generell in der Freigabeposition.

Besonders bevorzugt ist es dabei, wenn eine mechanische Vorspannung des Aktuierungsmechanismus größer ist als eine mechanische Vorspannung des Parksperrenmechanismus, so dass dann, wenn keine weiteren Kräfte wirken, der Aktuierungsmechanismus den Parksperrenmechanismus gegen dessen Vorspannung in die Parksperrenposition bewegen kann.

Von besonderem Vorzug ist es dabei, wenn die Verriegelungseinrichtung mittels der Walze in eine Entriegelungsposition bewegbar ist, um den Aktuierungsmechanismus freizugeben.

Hierbei kann an der Walze ein geeignetes Entriegelungsmerkmal vorgesehen sein, beispielsweise eine Rampenkontur oder dergleichen, die die Verriegelungseinrichtung bei einer Verdrehung der Walze in die Entriegelungsposition bewegt.

Gemäß einer alternativen oder einer akkumulativen Ausführungsform ist die Verriegelungseinrichtung mittels eines elektrischen oder hydraulischen Aktuators in die Entriegelungsposition bewegbar, um den Aktuierungsmechanismus freizugeben.

Bei der alternativen Ausführungsform kann die Walze folglich konstruktiv einfacher realisiert werden. Besonders bevorzugt ist dabei ein elektrischer Aktuator, beispielsweise in Form eines Elektromagnetaktuators.

Sofern die Verriegelungseinrichtung sowohl mittels der Walze als auch mittels des elektrischen oder hydraulischen Aktuators in die Entriegelungsposition versetzbar ist, ist die Möglichkeit einer redundanten Entriegelung gegeben.

Wenn beispielsweise die Walze blockiert ist, kann mittels des elektrischen oder hydraulischen Aktuators dennoch eine Bewegung der Verriegelungseinrichtung in die Entriegelungsposition erfolgen, um auf diese Weise die Parksperrenanordnung in die Parksperrenposition zu versetzen (und hierdurch ein Fahrzeug beispielsweise bei Ausfall einer Getriebesteuerung oder dergleichen zu immobilisieren).

Insbesondere dann, wenn der Aktuierungsmechanismus mechanisch in eine Aktivierungsposition vorgespannt ist, ist es von besonderem Vorzug, wenn an der Walze eine Mitnehmereinrichtung angeordnet ist, mittels der der Aktuierungsmechanismus von der Aktivierungsposition in eine Deaktivierungsposition bewegbar ist.

Bei dieser Ausführungsform wird die Walze folglich zum Versetzen des Aktuierungsmechanismus in die Deaktivierungsposition verwendet, in der der Aktuierungsmechanismus dann vorzugsweise mittels einer Verriegelungseinrichtung verriegelt wird.

Die Walze kann ein beliebiges drehbares Bauteil sein, kann beispielsweise als Rad, als Welle oder dergleichen ausgebildet sein.

Von besonderem Vorzug ist es jedoch, wenn die Walze eine Schaltwalze ist, die mit wenigstens einem Schaltglied gekoppelt ist, mittels dessen eine Schaltkupplungsanordnung betätigbar ist.

Bei dieser Ausführungsform hat die Schaltwalze folglich eine Doppelfunktion, zum einen die Betätigung der Schaltkupplungsanordnung, und zum anderen die Betätigung der Parksperrenanordnung.

Die Erfindung liegt bei dieser Ausführungsform insbesondere auch in der Bereitstellung eines Getriebes mit einer derartigen Parksperrenanordnung, wobei die Schaltwalze zum Betätigen von wenigstens einer Schaltkupplungsanordnung ausgelegt ist.

Die Schaltkupplungsanordnung kann insbesondere zum Ein- und Auslegen von Gangstufen der Getriebeanordnung dienen, wobei es sich bei der Getriebeanordnung vorzugsweise um ein Stirnradgetriebe in Vorgelegebauweise handelt.

Gemäß einem weiteren Aspekt der vorliegenden Erfindung, der mit dem obengenannten ersten Aspekt in beliebiger Kombination kombinierbar ist, wird die obige Aufgabe gelöst durch eine Parksperrenanordnung, die einen Parksperrenmechanismus aufweist, der einem Getriebe zugeordnet ist und der zwischen einer Parksperrenposition und einer Freigabeposition bewegbar ist, wobei die Parksperrenanordnung ferner einen Aktuierungsmechanismus aufweist, der mit dem Parksperrenmechanismus gekoppelt und in eine Aktivierungsposition mechanisch vorgespannt ist, in der der Parksperrenmechanismus in die Parksperrenposition bewegbar ist, wobei der Aktuierungsmechanismus mittels einer Verriegelungseinrichtung in einer Deaktivierungsposition verriegelbar ist, in der der Parksperrenmechanismus in die Freigabeposition bewegbar ist, wobei die Verriegelungseinrichtung in eine Verriegelungsposition mechanisch vorgespannt ist, in der die Verriegelungseinrichtung den Aktuierungsmechanismus in der Deaktivierungsposition verriegeln kann, wobei die Verriegelungseinrichtung mittels eines elektrischen Schaltantriebs zum Betätigen einer Schaltkupplung des Getriebes in eine Entriegelungsposition bewegbar ist, um den Aktuierungsmechanismus freizugeben, und wobei die Verriegelungseinrichtung redundant mittels eines elektrischen oder hydraulischen Aktuators in die Entriegelungsposition bewegbar ist, um den Aktuierungsmechanismus freizugeben.

Bei diesem Aspekt der Erfindung wird eine Parksperrenanordnung bereitgestellt, bei der vorzugsweise in jedem Betriebszustand des Kraftfahrzeuges eine redundante Betätigung der Parksperrenanordnung möglich ist.

Sofern beispielsweise der Schaltantrieb ausfällt, kann die Verriegelungseinrichtung mittels des elektrischen oder hydraulischen Aktuators in die Entriegelungsposition versetzt werden, wobei der Aktuierungsmechanismus hierdurch freigegeben wird und durch die mechanische Vorspannung den Parksperrenmechanismus in die Parksperrenposition versetzt.

Dabei ist es von besonderem Vorzug, wenn der elektrische Schaltantrieb von einem Getriebesteuergerät angesteuert ist, und wenn der elektrische oder hydraulische Aktuator von einem Fahrzeugsteuergerät angesteuert ist.

In diesem Fall kann bei Ausfall des Getriebesteuergerätes das übergeordnete Fahrzeugsteuergerät die Parksperrenanordnung in die Parksperrenposition versetzen, um auf diese Weise zu gewährleisten, dass auch bei Ausfall des Getriebesteuergerätes die Parksperrenanordnung in die Parksperrenposition versetzbar ist, um das Fahrzeug zu immobilisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigt:

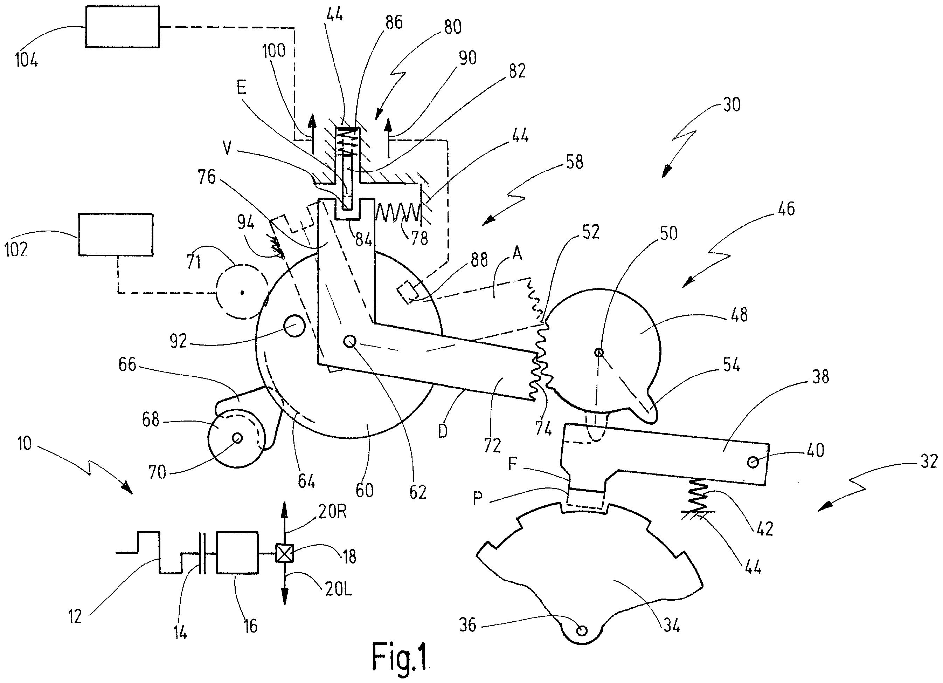

- Fig. 1: eine schematische Ansicht eines Antriebsstranges eines Kraftfahrzeuges mit einer Ausführungsform einer erfindungsgemäßen Parksperrenanordnung.

In Fig. 1 ist ein Antriebsstrang für ein Kraftfahrzeug schematisch dargestellt und generell mit 10 bezeichnet.

Der Antriebsstrang 10 weist einen Antriebsmotor 12 wie einen Verbrennungsmotor, eine Hybrid-Antriebseinheit, einen Elektromotor oder dergleichen auf. Ferner beinhaltet der Antriebsstrang 10 eine Kupplungsanordnung 14 und eine Getriebeanordnung 16. Ein Ausgang der Getriebeanordnung 16 ist mit einem Differential 18 verbunden, das Antriebsleistung auf angetriebene Räder 20L, 20R verteilt. Der Antriebsstrang 10 kann insbesondere ein Doppelkupplungsgetriebe beinhalten, bei dem die Kupplungsanordnung 14 zwei Reibkupplungen und bei dem die Getriebeanordnung 16 zwei Teilgetriebe aufweist.

Der Antriebsstrang 10 weist eine Parksperrenanordnung 30 auf, die vorzugsweise innerhalb der Getriebeanordnung 16 aufgenommen ist, jedoch auch in dem Differential 18 aufgenommen sein kann.

Die Parksperrenanordnung 30 dient zum Immobilisieren eines Kraftfahrzeuges, das mit dem Antriebsstrang 10 ausgestattet ist, und weist einen Parksperrenmechanismus 32 auf. Der Parksperrenmechanismus 32 kann eine Verdrehung einer mit einem Abtrieb des Kraftfahrzeuges verbundenen Welle verhindern, indem sich der Parksperrenmechanismus in einer Parksperrenposition an einem Gehäuse oder dergleichen abstützt.

Vorliegend weist der Parksperrenmechanismus 32 ein Parksperrenrad 34 auf, das an einer Antriebsstrangwelle 36 (beispielsweise einer Getriebeausgangswelle) festgelegt ist. Ferner beinhaltet der Parksperrenmechanismus 32 eine Parksperrenklinke 38, die um eine Klinkenachse 40 verschwenkbar gelagert ist. Die Klinkenachse 40 ist eine gehäusefeste Achse und ist vorzugsweise parallel zu der Antriebsstrangwelle 36 ausgerichtet. Das Parksperrenrad 34 weist an seinem Außenumfang eine schematisch angedeutete Verzahnung auf. Die Parksperrenklinke 38 weist im Bereich ihres freien Endes eine Nase auf. In einer Parksperrenposition P greift die Nase in eine Zahnlücke des Parksperrenrades 34 ein (in Fig. 1 gestrichelt dargestellt), um auf diese Weise eine Verdrehung des Parksperrenrades 34 und damit der Antriebsstrangwelle 36 zu verhindern. Zum Einrichten einer Freigabeposition F (in Fig. 1 in durchgezogenen Linien gezeigt) ist die Parksperrenklinke 38 so weit aus dem Bereich des Parksperrenrades 34 herausgeschwenkt, dass deren Nase nicht in die Verzahnung des Parksperrenrades 34 eingreift und dieses sich folglich frei drehen kann.

Der Parksperrenmechanismus 32 ist vorzugsweise in die Freigabeposition F mechanisch vorgespannt. Hierzu ist vorzugsweise eine Feder 42 vorgesehen, die sich beispielsweise an einem Gehäuse 44 der Parksperrenanordnung 30 abstützen kann.

Die Parksperrenanordnung 30 weist ferner eine Betätigungseinrichtung 46 auf. Die Betätigungseinrichtung 46 beinhaltet ein Betätigungsrad 48, das um eine Radachse 50 drehbar gelagert ist, die vorzugsweise parallel zu der Antriebsstrangwelle 36 ausgerichtet ist. An einem Umfangsabschnitt des Betätigungsrades 48 ist eine Radverzahnung 52 vorgesehen, wobei der Umfangsabschnitt kleiner gleich 90° sein kann, insbesondere kleiner gleich 45°, und insbesondere kleiner gleich 30° sein kann, wobei der Umfangsbereich vorzugsweise größer ist als 5°.

Der verbleibende Umfangsabschnitt des Betätigungsrades 48 muss nicht verzahnt sein und kann beliebig ausgestaltet sein, so dass das Betätigungsrad 48 auch von einer Kreisform abweichen kann.

An einem Außenumfang des Betätigungsrades 48 ist ein Nocken 54 ausgebildet. In der in Fig. 1 in durchgezogenen Linien gezeigten Drehposition des Betätigungsrades 48 greift der Nocken 54 nicht an der Parksperrenklinke 38 an. Wenn das Betätigungsrad 48 jedoch um einen Betätigungswinkel im Bereich von 5° bis 90°, insbesondere im Bereich von 10° bis 45°, verdreht wird, und zwar in eine in Fig. 1 mit gestrichelten Linien dargestellte Position, drückt der Nocken 54 die Parksperrenklinke 38 gegen die Vorspannung der Klinkenfeder 42 in Richtung des Parksperrenrades 34. Hierdurch wird in dem Parksperrenmechanismus 32 die Parksperrenposition P eingerichtet.

Das Betätigungsrad 48 kann dabei zweiteilig ausgebildet sein, ähnlich wie es in dem Dokument DE 20 2008 001 760 U1 beschrieben ist. Hierdurch kann eine zwischen den zwei Betätigungsradteilen vorgesehene Feder-Verspannung dazu verwendet werden, um das Betätigungsrad 48 auch dann verdrehen zu können, wenn sich die Nase der Parksperrenklinke 38 oberhalb eines Zahnes der Verzahnung des Parksperrenrades 34 befindet. Bei einem Weiterdrehen des Parksperrenrades 34 wird der Nocken 54 dann mittels der Verspannung nachgeführt, um die Parksperrenklinke 38 in die Verzahnung zu drücken.

Die Parksperrenanordnung 30 weist ferner einen Aktuierungsmechanismus 58 auf.

Der Aktuierungsmechanismus 58 dient zum Verdrehen des Betätigungsrades 48 und ist einer Walze in Form einer Schaltwalze 60 zugeordnet. Die Walze 60 ist um eine Walzenachse 62 herum drehbar gelagert, die parallel zu der Radachse 50 ausgerichtet ist. Am Außenumfang der Walze 60 ist eine Schaltnut 64 ausgebildet, in die ein Schaltglied 66 wie eine Schaltgabel greift. Das Schaltglied 66 greift an einer schematisch angedeuteten Schaltkupplungsanordnung 68 an, beispielsweise an einer Schaltmuffe hiervon. Die Schaltkupplungsanordnung 68 ist an einer Getriebewelle 70 gelagert, die parallel zu der Walzenachse 62 ausgerichtet ist.

Der Aktuierungsmechanismus 58 ist ebenfalls verdrehbar um die Walzenachse 62 herum gelagert (vorzugsweise begrenzt verdrehbar). Dabei ist der Aktuierungsmechanismus 58 ferner relativ zu der Walze 60 verdrehbar gelagert. Hierdurch kann die Walze 60 über einen weiten Winkelbereich verdreht werden, um beispielsweise unterschiedliche Gangstufen einzulegen, ohne dass dies einen Einfluss auf den Aktuierungsmechanismus 58 hat.

Ferner kann der Aktuierungsmechanismus 58 generell unabhängig von einer Verdrehposition der Walze 60 verdreht werden, um den Parksperrenmechanismus 32 weitgehend unabhängig von der Position der Schaltwalze 60 in die Parksperrenposition P zu bringen.

Die Schaltwalze 60 ist mittels eines schematisch angedeuteten Walzenantriebs 71 verdrehbar, bei dem es sich beispielsweise um einen Elektromotor handeln kann, der exzentrisch (wie gezeigt) oder konzentrisch zu der Walzenachse 62 angeordnet sein kann.

Der Aktuierungsmechanismus 58 weist einen Koppelabschnitt 72 auf, der eine Koppelverzahnung 74 beinhaltet. Die Koppelverzahnung 74 steht in Eingriff mit der Radverzahnung 52 des Betätigungsrades 48. Die Koppelverzahnung 74 kann sich ebenfalls über einen relativ geringen Umfangsabschnitt des Aktuierungsmechanismuss 58 erstrecken, beispielsweise im Bereich von 3° bis 90°, insbesondere im Bereich von 5° bis 45°.

Ferner weist der Aktuierungsmechanismus 58 einen Verriegelungsabschnitt 76 auf. Der Verriegelungsabschnitt 76 und der Koppelabschnitt 72 können die Enden eines zweiseitigen Hebels sein, wie es in Fig. 1 dargestellt ist. Die Abschnitte 72, 76 können jedoch auch Teile eines Rades oder dergleichen sein. Der Verriegelungsabschnitt 76 erstreckt sich in Fig. 1 über den Radius der Walze 60 hinaus, kann jedoch auch kürzer sein als der Radius.

Der Aktuierungsmechanismus 58 ist gegen das Gehäuse 44 mittels einer Vorspannfeder 78 in eine Aktivierungsposition A vorgespannt (in Fig. 1 gestrichelt dargestellt). In der Aktivierungsposition A ist der Aktuierungsmechanismus 58 so verdreht, dass das Betätigungsrad 48 so verdreht ist, dass die Parksperrenposition P eingerichtet wird.

In durchgezogenen Linien ist in Fig. 1 eine Deaktivierungsposition D des Aktuierungsmechanismus 58 gezeigt, bei der der Aktuierungsmechanismus 58 das Betätigungsrad 48 in eine Position verdreht hat, bei der die Parksperrenklinke 38 mittels der Klinkenfeder 42 in die Freigabeposition F gedrückt werden kann.

Der Aktuierungsmechanismus 58 wird mittels einer Verriegelungseinrichtung 80 in der Deaktivierungsposition D gehalten. Die Verriegelungseinrichtung 80 weist ein Verriegelungsglied 82 auf, das an dem Gehäuse 44 verschieblich gelagert ist. Vorliegend ist die Verschieberichtung des Verriegelungsgliedes 82 radial zu der Walzenachse 62. In anderen Ausführungsformen kann die Verschieberichtung jedoch auch parallel zu der Walzenachse 62 ausgerichtet sein.

An dem Verriegelungsabschnitt 76 des Aktuierungsmechanismus 58 ist eine Verriegelungsvertiefung 84 ausgebildet. Das Verriegelungsglied 82 ist mittels einer Verriegelungfeder 86 in eine Verriegelungsposition V vorgespannt, bei der das Verriegelungsglied 82 in die Verriegelungsvertiefung 84 greift, um auf diese Weise den Aktuierungsmechanismus 58 in der Deaktivierungsposition D zu verriegeln.

Das Verriegelungsglied 82 ist gegen die Kraft der Verriegelungsfeder 86 in eine Entriegelungsposition E verschiebbar, bei der das Verriegelungsglied 82 nicht in die Verriegelungsvertiefung 84 greift. In der Entriegelungsposition E der Verriegelungseinrichtung 80 ist der Aktuierungsmechanismus 58 folglich freigegeben, und wird durch die Kraft der Vorspannfeder 78, die sich an dem Gehäuse 44 abstützt, in Richtung der Aktivierungsposition A verdreht, und zwar im Wesentlichen unabhängig von der Position der Schaltwalze 60.

Hierdurch wird über das Verdrehen des Betätigungsrades 48 die Parksperrenklinke 38 in die Parksperrenposition P versetzt.

Das Bewegen des Verriegelungsgliedes 82 in die Entriegelungsposition E erfolgt in der Regel mittels eines mechanischen Entriegelungsmerkmals 88 an der Schaltwalze 60, über das das Verriegelungsglied 82 bei einer bestimmten Drehposition der Schaltwalze 60 relativ zu dem Aktuierungsmechanismus 58 in die Entriegelungsposition E versetzt wird. Dies ist in Fig. 1 lediglich schematisch angedeutet (Walzenentriegelung 90).

Zum Überführen der Parksperrenanordnung 30 aus der Parksperrenposition P in die Freigabeposition F ist es notwendig, den Aktuierungsmechanismus 58 von der Aktivierungsposition A in die Deaktivierungsposition D zu verdrehen.

Zu diesem Zweck ist an der Schaltwalze 60 vorzugsweise eine Mitnehmereinrichtung 92 vorgesehen, die dazu ausgebildet ist, den Aktuierungsmechanismus 58 über einen begrenzten Winkelbereich mitzunehmen, bis der Aktuierungsmechanismus 58 wieder mit der Verriegelungseinrichtung 80 ausgerichtet ist, um dann mittels der Verriegelungsfeder 86 wiederum die Verriegelungsposition V des Verriegelungsgliedes 82 einzurichten.

Bei 94 ist schematisch ein Anschlag gezeigt, der beispielsweise mit dem Gehäuse 44 verbunden sein kann und der die Verdrehung des Aktuierungsmechanismus 58 durch die Vorspannfeder 78 auf einen kleinen Winkelbereich begrenzt, der im Bereich der oben angegebenen Winkelbereiche liegen kann.

In Fig. 1 ist ferner bei 100 ein Aktuator schematisch dargestellt, der als elektrischer oder hydraulischer Aktuator ausgebildet sein kann, vorzugsweise als Elektromagnetaktuator. Der Aktuator 100 dient in redundanter Art und Weise dazu, das Verriegelungsglied 82 gegen die Kraft der Verriegelungsfeder 86 in die Entriegelungsposition E zu versetzen.

Hierdurch ist unabhängig von der Drehstellung der Schaltwalze 60 ein Einlegen der Parksperrenanordnung (Überführen in die Parksperrenposition P) jederzeit möglich, auch dann, wenn beispielsweise die Schaltwalze 60 blockiert ist oder nicht angetrieben werden kann, so dass das Entriegelungsmerkmal 88 nicht in Eingriff mit dem Verriegelungsglied 82 gebracht werden kann.

Der Walzenantrieb 71 ist vorzugsweise mit einem Getriebesteuergerät 102 verbunden, mittels dessen der elektrische Walzenantrieb 71 dazu angesteuert wird, die Schaltwalze 60 in unterschiedliche Drehpositionen zu verdrehen, um beispielsweise Gangstufen ein- und auszulegen oder die Parksperrenanordnung 30 zu betätigen.

Sofern das Getriebesteuergerät 102 ausfällt, kann die Schaltwalze 60 folglich nicht mehr dazu verwendet werden, um die Parksperrenanordnung 30 in die Parksperrenposition P zu überführen.

Aus diesem Grund ist der Aktuator 100 vorzugsweise mit einem anderen Steuergerät, insbesondere einem Fahrzeugsteuergerät oder einem Motorsteuergerät 104, verbunden. Dieses kann folglich durch Ansteuern des Aktuators 100 ein Überführen der Parksperrenanordnung 30 in die Parksperrenposition P auch dann initiieren, wenn das gegebenenfalls untergeordnete Getriebesteuergerät 102 ausgefallen ist.

Gemäß einer weiteren bevorzugten Ausführungsform kann der Aktuator 100 auch von mehreren Stellen aus aktiviert werden, beispielsweise mittels des Fahrzeugsteuergerätes 104 oder mittels des Getriebesteuergerätes 102, so dass die Parksperrenanordnung 30 auch dann in die Parksperrenposition P überführt werden kann, wenn das Fahrzeugsteuergerät 104 ausgefallen ist und die Schaltwalze 60 beispielsweise mechanisch blockiert ist, das Getriebesteuergerät 102 jedoch funktioniert.

Die erfindungsgemäße Parksperrenanordnung 30 kann aufgrund ihres einfachen Aufbaus zu niedrigen Kosten und bei geringer Kompexität hergestellt werden. Ferner ergibt sich eine hohe Integrität und eine hohe Robustheit.

Insgesamt wird ferner eine erhöhte Verfügbarkeit der Parksperrenanordnung 30 sichergestellt. Zudem kann eine vollintegrierte Lösung realisiert werden. Wenn eine redundante Betätigung der Verriegelungseinrichtung 80 nicht gewünscht ist, kann der Aktuator 100 beispielsweise auch entfallen.

Der Aktuator 100 kann anstelle eines Elektromagnetantriebes auch einen Elektromotor mit Spindelantrieb beinhalten.

Ferner kann die Parksperrenanordnung 30 auch mit einer klassischen Parksperre ("Bullet-Design") über entsprechende Umlenkmechanismen kombiniert werden.

## Patentansprüche

1. Parksperrenanordnung (30) mit einem Parksperrenmechanismus (32), der zwischen einer Parksperrenposition (P) und einer Freigabeposition (F) bewegbar ist, mit
- einer um eine erste Achse (50) verdrehbar gelagerten Betätigungseinrichtung (46), die dazu ausgebildet ist, durch eine Verdrehung den Parksperrenmechanismus (32) zu betätigen; und
- einer Koppeleinrichtung (52, 74), die die Betätigungseinrichtung (46) mit einem Aktuierungsmechanismus (58) koppelt;
wobei der Aktuierungsmechanismus (58) um eine zweite Achse (62) relativ zu einer Walze (60) verdrehbar gelagert ist, die mittels eines Antriebs (71) um die zweite Achse (62) verdrehbar ist, wobei der Aktuierungsmechanismus (58) mittels einer Verriegelungseinrichtung (80) in einer Deaktivierungsposition (D) verriegelbar ist, in der der Parksperren-mechanismus (32) in die Freigabeposition (F) bewegbar ist
**dadurch gekennzeichnet, dass**
die Verriegelungseinrichtung (80) in eine Verriegelungsposition (V) mechanisch vorgespannt ist, in der die Verriegelungseinrichtung (80) den Aktuierungsmechanismus (58) in der Deaktivierungsposition (D) verriegelt.

2. Parksperrenanordnung nach Anspruch 1, **dadurch gekennzeichnet, dass** der Aktuierungsmechanismus (58) mechanisch in eine Aktivierungsposition (A) vorgespannt ist, in der der Parksperrenmechanismus (32) in die Parksperrenposition (P) bewegbar ist.

3. Parksperrenanordnung nach Anspruch 1 oder 2, **dadurch gekennzeichnet, dass** der Parksperrenmechanismus (32) mechanisch in die Freigabeposition (F) vorgespannt ist.

4. Parksperrenanordnung nach Anspruch 1, **dadurch gekennzeichnet, dass** die Verriegelungseinrichtung (80) mittels der Walze (60) in eine Entriegelungsposition (E) bewegbar ist, um den Aktuierungsmechanismus (58) freizugeben.

5. Parksperrenanordnung nach Anspruch 1 oder nach Anspruch 4, **dadurch gekennzeichnet, dass** die Verriegelungseinrichtung (80) mittels eines elektrischen oder hydraulischen Aktuators (100) in eine Entriegelungsposition (E) bewegbar ist, um den Aktuierungsmechanismus (58) freizugeben.

6. Parksperrenanordnung nach einem der Ansprüche 1 bis 5, **dadurch gekennzeichnet, dass** an der Walze (60) eine Mitnehmereinrichtung (92) angeordnet ist, mittels der der Aktuierungsmechanismus (58) von einer Aktivierungsposition (A) in eine Deaktivierungsposition (D) bewegbar ist.

7. Parksperrenanordnung nach einem der Ansprüche 1 bis 6, **dadurch gekennzeichnet, dass** die Walze eine Schaltwalze (60) ist, die mit wenigstens einem Schaltglied (66) gekoppelt ist, mittels dessen eine Schaltkupplungsanordnung (68) betätigbar ist.

8. Parksperrenanordnung (30) nach einem der Ansprüche 1 bis 7, **dadurch gekennzeichnet, dass** die Verriegelungseinrichtung (80) mittels eines elektrischen Schaltantriebs (71, 90) zum Betätigen einer Schaltkupplung (68) des Getriebes (16) in eine Entriegelungsposition (E) bewegbar ist, um den Aktuierungsmechanismus (58) freizugeben, und wobei die Verriegelungseinrichtung (80) redundant mittels eines elektrischen oder hydraulischen Aktuators (100) in die Entriegelungsposition (E) bewegbar ist, um den Aktuierungsmechanismus (58) freizugeben.

9. Parksperrenanordnung nach Anspruch 8, **dadurch gekennzeichnet, dass** der elektrische Schaltantrieb (71, 90) von einem Getriebesteuergerät (102) angesteuert ist, wobei der elektrische oder hydraulische Aktuator (100) von einem Fahrzeugsteuergerät (104) angesteuert ist.

## Claims

1. Parking lock arrangement (30), having a parking lock mechanism (32), which can be moved between a parking lock position (P) and a release position (F), and having
- an operating device (46) which is supported so that it can rotate about a first axis (50) and which is designed, through rotation, to operate the parking lock mechanism (32); and
- a coupling device (52, 74) which couples the operating device (46) to an actuating mechanism (58);
wherein the actuating mechanism (58) is supported so that it can rotate about a second axis (62) relative to a drum (60), which by means of a drive (71) is rotatable about the second axis (62), wherein the actuating mechanism (58) can be locked by means of a locking device (80) in a deactivation position (D), in which the parking lock mechanism (32) can be moved into the release position (F),
**characterized in that**
the locking device (80) is mechanically biased into a locking position (V), in which the locking device (80) locks the actuating mechanism (58) in the deactivation position (D).

2. Parking lock arrangement according to Claim 1, **characterized in that** the actuating mechanism (58) is mechanically biased into an activation position (A), in which the parking lock mechanism (32) can be moved into the parking lock position (P).

3. Parking lock arrangement according to Claim 1 or 2, **characterized in that** the parking lock mechanism (32) is mechanically biased into the release position (F).

4. Parking lock arrangement according to Claim 1, **characterized in that** the locking device (80) can be moved by means of the drum (60) into a release position (E), in order to release the actuating mechanism (58).

5. Parking lock arrangement according to Claim 1 or Claim 4, **characterized in that** the locking device (80) can be moved into a release position (E) by means of an electrical or hydraulic actuator (100), in order to release the actuating mechanism (58).

6. Parking lock arrangement according to one of Claims 1 to 5, **characterized in that** a catch device (92), which serves to move the actuating mechanism (58) from an activation position (A) into a deactivation position (D), is arranged on the drum (60).

7. Parking lock arrangement according to one of Claims 1 to 6, **characterized in that** the drum is a shift drum (60), which is coupled to at least one shifting element (66), which serves to operate a shifting clutch arrangement (68).

8. Parking lock arrangement (30) according to one of Claims 1 to 7, **characterized in that** the locking device (80) being movable into a release position (E) by means of an electrical shift drive (71, 90) for the operation of a shifting clutch (68) of the gearbox (16), in order to release the actuating mechanism (58), and the locking device (80) being redundantly moveable into the release position (E) by means of an electrical or hydraulic actuator (100), in order to release the actuating mechanism (58).

9. Parking lock arrangement according to Claim 8, **characterized in that** the electrical shift drive (71, 90) is activated by a transmission control unit (102), the electrical or hydraulic actuator (100) being activated by a vehicle control unit (104).

## Revendications

1. Ensemble de verrouillage de stationnement (30) comprenant un mécanisme de verrouillage de stationnement (32) qui peut être déplacé entre une position de verrouillage de stationnement (P) et une position de libération (F), comprenant
- un dispositif d'actionnement (46) supporté de manière à pouvoir tourner autour d'un premier axe (50), qui est réalisé de manière à actionner le mécanisme de verrouillage de stationnement (32) par rotation ; et
- un dispositif d'accouplement (52, 74) qui accouple le dispositif d'actionnement (46) à un mécanisme d'activation (58) ;
le mécanisme d'activation (58) étant supporté de manière à pouvoir tourner autour d'un deuxième axe (62) par rapport à un cylindre (60) qui peut tourner au moyen d'un entraînement (71) autour du deuxième axe (62), le mécanisme d'activation (58) pouvant être verrouillé au moyen d'un dispositif de verrouillage (80) dans une position de désactivation (D) dans laquelle le mécanisme de verrouillage de stationnement (32) peut être déplacé dans la position de libération (F),
**caractérisé en ce que**
le dispositif de verrouillage (80) est précontraint mécaniquement dans une position de verrouillage (V) dans laquelle le dispositif de verrouillage (80) verrouille le mécanisme d'activation (58) dans la position de désactivation (D).

2. Ensemble de verrouillage de stationnement selon la revendication 1, **caractérisé en ce que** le mécanisme d'activation (58) est précontraint mécaniquement dans une position d'activation (A) dans laquelle le mécanisme de verrouillage de stationnement (32) peut être déplacé dans la position de verrouillage de stationnement (P).

3. Ensemble de verrouillage de stationnement selon la revendication 1 ou 2, **caractérisé en ce que** le mécanisme de verrouillage de stationnement (32) est précontraint mécaniquement dans la position de libération (F).

4. Ensemble de verrouillage de stationnement selon la revendication 1, **caractérisé en ce que** le dispositif de verrouillage (80) peut être déplacé au moyen du cylindre (60) dans une position de déverrouillage (E) afin de libérer le mécanisme d'activation (58).

5. Ensemble de verrouillage de stationnement selon la revendication 1 ou selon la revendication 4, **caractérisé en ce que** le dispositif de verrouillage (80) peut être déplacé au moyen d'un actionneur électrique ou hydraulique (100) dans une position de déverrouillage (E) afin de libérer le mécanisme d'activation (58).

6. Ensemble de verrouillage de stationnement selon l'une quelconque des revendications 1 à 5, **caractérisé en ce qu'**un dispositif d'entraînement (92) est disposé sur le cylindre (60), au moyen duquel le mécanisme d'activation (58) peut être déplacé d'une position d'activation (A) dans une position de désactivation (D).

7. Ensemble de verrouillage de stationnement selon l'une quelconque des revendications 1 à 6, **caractérisé en ce que** le cylindre est un cylindre de commutation (60) qui est accouplé à au moins un organe de commutation (66) au moyen duquel un agencement d'embrayage de commutation (68) peut être actionné.

8. Ensemble de verrouillage de stationnement (30) selon l'une quelconque des revendications 1 à 7, **caractérisé en ce que** le dispositif de verrouillage (80) peut être déplacé au moyen d'un entraînement de commutation électrique (71, 90) pour actionner un embrayage de commutation (68) de la transmission (16) dans une position de déverrouillage (E) afin de libérer le mécanisme d'activation (58), et le dispositif de verrouillage (80) étant déplaçable de manière redondante au moyen d'un actionneur électrique ou hydraulique (100) dans la position de déverrouillage (E) afin de libérer le mécanisme d'activation (58).

9. Ensemble de verrouillage de stationnement selon la revendication 8, **caractérisé en ce que** l'entraînement de commutation électrique (71, 90) est commandé par un appareil de commande de transmission (102), l'actionneur électrique ou hydraulique (100) étant commandé par un appareil de commande du véhicule (104).
